Europäisches Patentamt

**European Patent Office**

Office européen des brevets

(11) Numéro de publication: **0 074 286**

A2

## (12) DEMANDE DE BREVET EUROPEEN

(21) Numéro de dépôt: **82401290.0**

(22) Date de dépôt: **08.07.82**

(51) Int. Cl.³: **B 62 D 57/02**
**B 60 F 3/00**

(30) Priorité: **04.09.81 FR 8116970**

(43) Date de publication de la demande:
**16.03.83 Bulletin 83/11**

(84) Etats contractants désignés:
**BE DE FR GB IT SE**

(71) Demandeur: **INTERNATIONAL ROBOTIC ENGINEERING INC.**
**Suite 1310 485 Madison avenue**
**New York, N.Y. 10020(US)**

(72) Inventeur: **Kroczynski, Patrice Alain**
**120, rue Camille Groult**
**F-94440 Vitry(FR)**

(74) Mandataire: **Phélip, Bruno et al,**
**c/o Cabinet Harlé & Phélip 21, rue de La Rochefoucauld**
**F-75009 Paris(FR)**

(54) **Système de robots à pattes ou à bras.**

(57) L'invention concerne les robots quadrupèdes, hexapodes et autres robots à pattes qui permettent de se déplacer en terrain accidenté, d'enjamber des obstacles, d'escalader et travailler en zone contaminée.

Le système robotique à pattes comprend une architecture multimicroprocesseur qui commande un dispositif de leviers intérieurs, actionnés par des vérins en liaison avec un groupe de puissance.

D'autres dispositifs du système:le collier, le changeur automatique d'outils, les dispositions constructives de la coque composent le robot à pattes.

Parmi les applications les plus intéressantes de l'invention, on peut citer: les robots de plaisance, les robots quadrupèdes ou hexapodes de survie, l'architecture à pattes.

Fig 10

## Système de robots à pattes ou à bras

La présente invention se rapporte aux robots à pattes ou à bras. Les utilisations les plus importantes sont dans le domaine de la survie après un cataclysme naturel ou artificiel, la progression d'engins en tout terrain, la progression amphibie, le secours aux engins embourbés ou immobilisés, l'architecture à pattes, la robotique de plaisance, la promenade dans les parcs d'attraction , la présentation de produits et la desserte de machines-outils.

On connaît des robots type hexapode, monopode, avec actionneurs électriques ou hydrauliques, robots de guerre soviétiques à pattes. Mais ces robots sont limités dans leurs possibilités d'action par une cinématique adaptée aux fonctions de progression et de tir automatique. D'autre part, ces robots ne sont pas modulaires, et il n'est pas possible d'accroître leur puissance par autoassemblage, ou accroître leur flexibilité par automodification.

La présente invention permet d'éviter ces inconvénients. En effet, une double structure matérielle et logicielle articulée autour d'un multiprocesseur permet aux robots, suivant l'invention, de changer eux-mêmes leurs outils terminaux, d'utiliser la locomotion 6 pattes ou la locomotion 4 pattes avec 2 pattes en bras robotique après autochangement d'outils. Le travail en groupe de robots synchronisés pour additionner leur puissance est également possible.

La présente invention permet de naviguer en surface d'une manière silencieuse et difficilement détectable grâce à un changement automatique d'outils en forme de palmes de natation. Ils peuvent également travailler en faible immersion grâce à un dispositif de ballasts particulier.

DA.

2

0074286

Fig.1 représente l'architecture informatique du système de commande du robot;

Fig. 2 représente une épaule de robot à 3 degrés de liberté vue en coupe transversale;

Fig. 3 représente la disposition des actionneurs de l'épaule;

Fig. 4 représente une charge soulevée pour locomotion par des paires de robots;

Fig. 5 a,b,c, représente la progression sur le sol d'un des robots de la figure 4;

Fig.6 représente,vue de dessus, une habitation modulaire mue par des paires de robots à pattes;

Fig. 7 représente un robot à 6 pattes vu de dessus pour les promenades dans les parcs ou les présentations de produits;

Fig. 8 représente un autre module d'habitation à pattes vu de dessus;

Fig.9 représente, vu en coupe, le robot à pattes pour promenade de la figure 7;

Fig. 10 représente une variante de robot de plaisance habitable en élévation;

Fig.11 représente le robot de la figure 10 de face;

Fig. 12 représente,vue de dessus,l'aménagement d'un robot de plaisance;

Fig.13 représente,en élévation,un robot de plaisance en train de nager;

Fig.14 représente un dispositif de changement automatique d'outils;

Fig.15 représente une variante de construction de robot de plaisance vue en plan.

Fig.16 représente le même robot en élévation.

Fig. 17 représente le même robot en coupe.

Fig.18 représente une variante d'articulation de cou ou de trompe de robot en coupe horizontale.

Fig.19 représente une autre variante d'articulation de cou ou de trompe de robot en coupe horizontale;

Fig. 20 représente une variante de robot à pattes avec tête inclinable pour marche terrestre;

Fig. 21 représente une autre variante avec tête non inclinée où 2 bras robotiques sont solidaires de la tête.

Fig. 22 représente une autre variante d'épaule de robot en coupe transversale;

Fig. 23 représente un robot modulaire en élévation.

Fig. 24 représente des éléments d'architecture à pattes robotissables par adjonction de modules de robotisation.

Fig. 25 représente un module de robotisation pour architecture à pattes.

Fig. 26 représente en perspective, une épaule de robot.

Fig. 27 représente un schéma en perspective d'une autre structure d'épaule;

Fig. 28 représente un robot à bras.

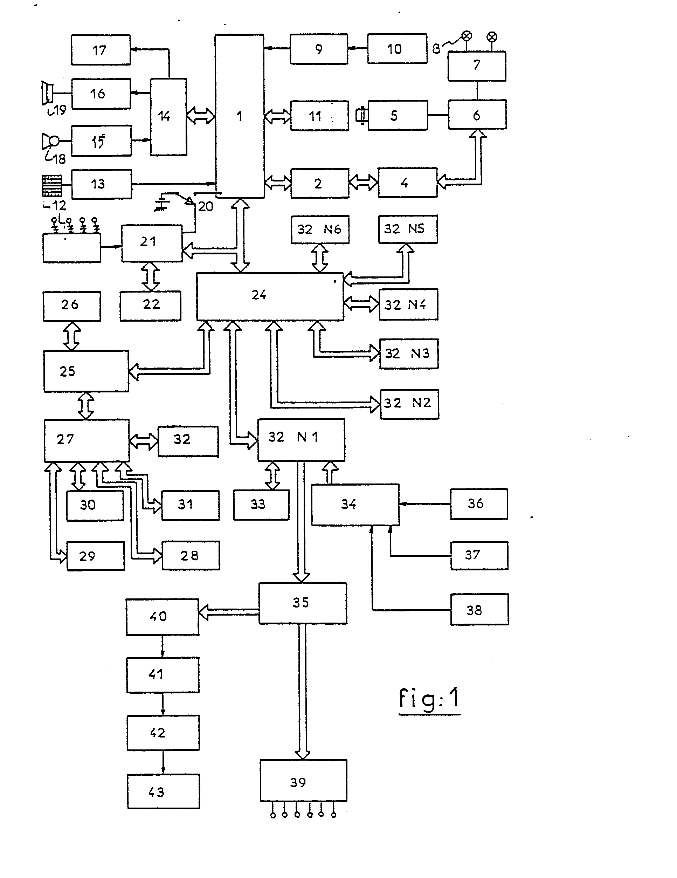

L'architecture informatique d'un robot à pattes suivant la présente invention est constituée par : un processeur central dit : processeur frontal repère 1 figure 1; il est raccordé à des mémoires vives et mémoires reprogrammables électriquement repère 2. Ces mémoires sont connectées par un ADM (Accès Direct en Mémoire) - repère 3 aux circuits d'intelligence artificielle repère 4.

Ces circuits seront basés sur les systèmes genre TROPIC, IDA, NOAH, MYCIN, DENDRAL, avec langage spécialisé ALICE, PLASMA, etc.... L'apprentissage en intelligence artificielle s'effectuera en descriptions, en procédures ou en concepts.

Une caméra CCD,repère 5,envoie un signal numérique traité par les circuits de reconnaissance de forme repère 6. Leur logiciel sera articulé par les classifications supervisées:décision bayesienne, méthodes paramétriques ou méthodes de dichotomies.

Un détecteur d'obstacles à ultra sons-repère 7- est cablé sur ses sondes émettrices et réceptrices-repère 8.Naturellement,pour ce dispositif, on peut utiliser les émetteurs multibandes à faisceaux étroits,de manière à améliorer la définition des obstacles. De même,une variante consiste à connecter un circuit à effet Dopler pour obtenir une information sur la vitesse relative des obstacles. Les informations numériques du détecteur d'obstacles sont introduites sur les circuits d'intelligence artificielle. Le processeur frontal est également connecté aux circuits de navigation-repère 9. On peut utiliser plusieurs circuits connus en navigation, notamment la navigation à l'estime en sommant les pas dans les différentes directions,la navigation goniométrique automatique,la navigation par satellites,la navigation hyperbolique par balises terrestres ou sous-marines-(émetteurs ou transpondeurs Pingers).

Ces informations sont complétées par les sondeurs positionneurs-repère 10- qui donnent la cote du robot par rapport à 2 points du sol,ce qui permet d'en déduire,en liaison avec un inclinomètre ou accéléromètre électrolytique,la position par rapport à la surface-(cas de progression en marécages).

Un détecteur d'eau par conduction est installé près de chaque sonde,ce qui permet de faire varier la fréquence d'horloge correspondante à la vitesse des ultra sons dans l'air et dans l'eau.

La liaison télécommunications-repère 11- est cablée sur le processeur frontal. Cette liaison permet à des groupes de robots de se synchroniser ou à l'appel d'un robot,on utilisera les infrarouges ou les ondes hertziennes.

D'autre part,le processeur frontal est connecté sur un clavier - repère 12 - par l'intermédiaire d'un codeur - repère 13 - ce qui permet d'entrer des programmes ou des ordres (le cap de progression par exemple). Un interface- repère 14 - assure la liaison avec le circuit de reconnaissance des sons - repère 15 - pourvu d'un micro-repère 18- prévu pour la commande vocale du robot. Haut parleur 19- Synthétiseur 16 .

Un synthétiseur de voix-repère 16-actionne un haut-parleur- repère 19- pour communication vocale du robot. Un écran-repère 17- permet de visualiser les paramètres dans la cabine du robot. Naturellement,pour des robots simples,comme les robots de promenade, la plupart de ces dispositifs ne sont pas nécessaires au fonctionnement de l'appareil.

Un interrupteur à clé- repère 20-assure la sélection marche intelligente, marche robotique pour secours ou pour opérations d'entretien. En sécurité,par exemple apparitions de démons en intelligence artificielle,un micro processeur- repère 21- est substitué au processeur frontal,mais le robot n'a plus d'intelligence artificielle et ses possibilités sont réduites, sa mémoire est limitée à la mémoire vive et à la mémoire programme du circuit-repère 22.

Un connecteur débrochable- repère 23- permet d'isoler le processeur frontal pour opérer une réparation.

L'ensemble des actionneurs et des capteurs du robot passe par le circuit optoélectronique d'interface - repère 24. Le microprocesseur-repère 25- pour fluides et servitures est relié à sa mémoire -repère 26- comprenant une partie de mémoire vide et une partie de mémoire programmable électriquement. Un circuit d'entrée sortie - repère 27- est cablé sur les commandes du moteur thermique ou générateur de puissance - repère 32 - ainsi que sur le sondeur-repère 29- à ultra sons de secours et l'inclinomètre électrolytique ou accéléromètre - repère 28 -de secours.

Dans le cas de robots immergeables,les vannes des ballasts spéciaux- repère 30 -sont connectées également au circuit ainsi que les capteurs de pression et commande de cylindrée hydraulique du groupe hydraulique générateur-repère 31.

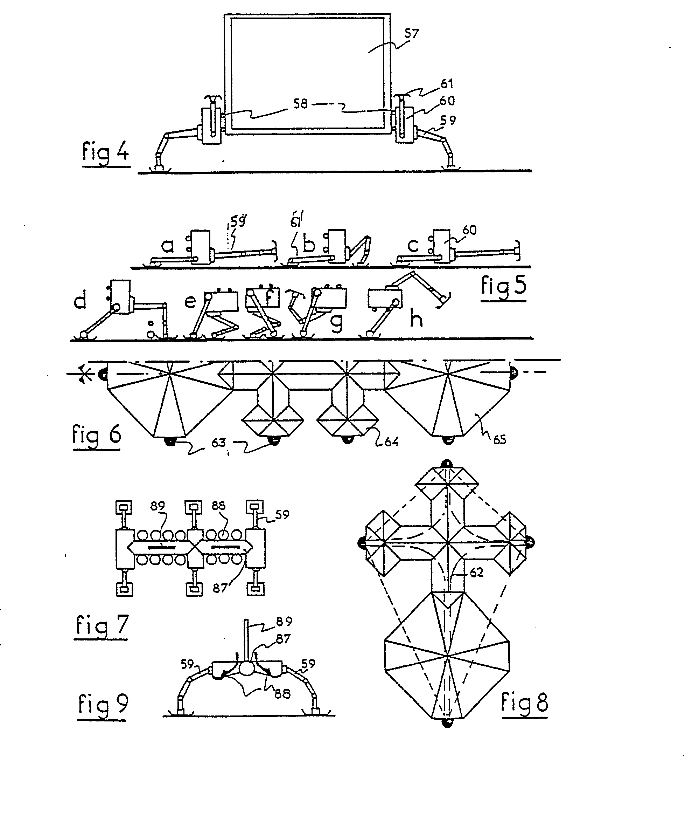

Les interfaces d'entrées sorties-repère 24-sont également connectées aux microprocesseurs des pattes,dans l'exemple traité sur la figure 1, 6 pattes ont été représentées par les blocs repères 32 no1, 32 no 2 jusqu'à no 6. Mais dans un but de simplification,seule la patte no 1 a été représentée. Le circuit 32 no 1 est le microprocesseur de la patte. Il est relié à ses mémoires vives et programmables électriquement - repère 33 - ainsi qu'au circuit d'interface d'entrées - repère 34 - et au circuit d'interface de sorties - repère 35.

Les capteurs de position des variables articulaires - repère 36 - les capteurs de force (qui sont des capteurs de pression dans le cas de robot hydraulique)-repère 37 - ainsi que les capteurs de proximités à ultra sons pour l'approche finale de la patte - repère 38 - sont connectés à l'interface d'entrée - repère 34.

L'interface de sortie - repère 35 - est connectée au convertisseur numérique analogique - repère 40 - qui fournit une tension au circuit convertisseur tension/courant - repère 41 -,lui-même alimentant la servo valve - repère 42 - qui laisse passer un débit proportionnel dans l'actionneur hydraulique -repère 43 - correspondant à une variable articulaire. Il est précisé que chaque variable articulaire est commandée par un système similaire qui,dans un but de simplification n'est pas représenté .

L'interface de sorties - repère 35 - est connectée au circuit de puissance - repère 39 - qui commande les électroaimants de verrouillage des outils sur la patte.

Pour certaines variantes de robot,par exemple l'architecture à pattes,on simplifie la commande des pattes en utilisant des distributeurs à 2 vitesses,en remplacement des servo valves. Dans ce cas,on utilisera le circuit - repère 39 - pour la commande directe des distributeurs.

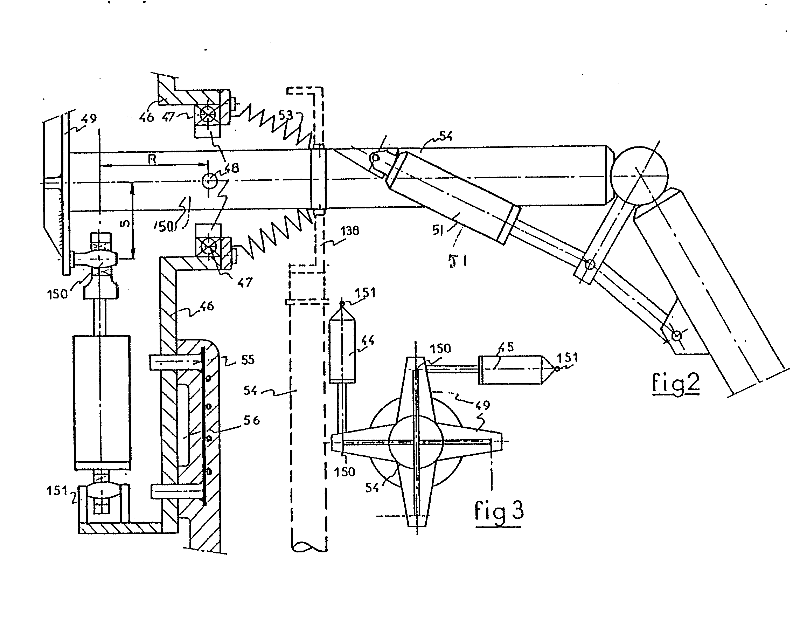

Sur la figure 2,est représentée une articulation d'épaule qui a la particularité de posséder 3 degrés de liberté obtenus avec deux vérins à double effet - repère 44 - pour celui dont l'axe est vertical, et 45 pour celui dont l'axe est horizontal. Un châssis rigide - repère 46 - comporte une cavité où est disposé un roulement à billes- repère 47 - (ou un palier ou un roulement conique ou à aiguilles). Ce roulement assure un premier degré de liberté:la rotation. Un cardan -repère 48 - assure le deuxième et le troisième degré de liberté. L'ensemble,roulement plus cardan,est équivalent à une rotule ; on pourra, en conséquence,pour les petits robots,utiliser une rotule,ce qui est plus économique.

Un levier-repère 49 - est rendu solidaire de l'axe d'épaule- repère 50. Un dispositif à rotule - repère 150 -assure la liaison entre la pièce- repère 49 - et la tige du vérin. Le corps du vérin sera relié par un dispositif à rotule - repère 151 - au châssis-repère 46.

On notera que l'on peut,indifféremment, disposer deux vérins à double effet ou quatre vérins pour augmenter la puissance du robot.

On notera la disposition d'un soufflet en matière souple- repère 53- qui évite la pénétration. de la poussière ou de l'eau à l'intérieur du dispositif. Le mouvement d'épaule peut être complété par un mouvement de translation ou un mouvement de rotation comme celui qui a été représenté avec un vérin à double effet-repère 51.

Il est à noter que les vérins peuvent être indifféremment hydraulique ou électrique,sur la figure 3 où l'on remarque la cinématique.

Si le système électronique précédemment décrit active le vérin 44 uniquement on obtient un mouvement de bas en haut de l'axe d'épaule avec une petite composante parasite due au point fixe du vérin 45. Mais cette composante est mineure et peut se compenser par action conjuguée de très faible amplitude du vérin 45. Si on active seulement le vérin 44,les 2 vérins étant à 90° ,l'action est permutée de 90°, c'est-à-dire que c'est un mouvement d'avant en arrière qui prend naissance.

Si l'on active conjointement les 2 vérins, c'est un mouvement de rotation de l'épaule qui apparaît.

En cas d'utilisation de vérins hydrauliques,on aura intérêt à fixer le corps du vérin côté axe d'épaule et la tige côté châssis pour utiliser la plus grande force pour le déplacement du robot du bas vers le haut,et non le contraire. L'un des intérêts du système est la composition des mouve-ments en marche lente,on avance la patte sans énergie pour la soulever et vice versa.

La locomotion à pattes demande d'écono-miser l'énergie dépensée par unité de longueur fran-chie.

La figure 4 représente un engin repère 57 qui peut être un camion,un petit bâtiment préfabriqué ou un conteneur clampé par des points d'accrochage- repère 58 - et soulevé par des pattes autonomes - repère 59 - qui sont solidaires de leur coffret de puissance - repère 60.

Les pattes accessoires - repère 61 - sont en position haute. Dans cette variante du système robotique il existe 3 fonctions principales : l'approche, le clampage et la marche. Ces fonctions sont assurées par le dispositif de coffret de puissance comprenant :une réserve d'énergie et un dispositif générateur pour alimentation en puissance des pattes (soit énergie électrique par batteries ou piles à combustible,soit hydraulique par l'intermédiaire d'un moteur électrique ou thermique). Le coffret comprend également le dispositif de commande mais avec la particularité d'avoir le système de télécommunica-tion-repère 11 - figure 1 - par cellules optoélectro-niques en bout du dispositif de clampage - repère 58.

Sur la figure 8 sont figurés les cheminements des fibres optiques assurant le passage des informations d'une patte à l'autre - (repère 62). Les deux pattes auxiliaires - repère 61 - qui sont sur chaque coffret sont prévues pour la marche d'approche. Cette marche d'approche peut s'effectuer de plusieurs manières différentes dont l'allure rampée est représentée en a, b et c figure 5, alors que l'allure roulée est figurée d, e, f, g, h , etc. figure 5. On remarquera les possibilités d'évolution importantes que donnent à cette configuration les 2 pattes auxiliaires - repère 61 - qui ne sont pas limitées par des butées dans leur rotation autour de leur axe. Ces pattes auxiliaires évitent, de plus, que le robot ne puisse se sortir, par ses propres moyens, d'une situation retournée. Le procédé de fonctionnement est le suivant: l'engin embourbé doit posséder des points de clampage pour robot. Ces points de clampage émettent un signal avec codage spécifique à chaque point soit par ultra-sons, soit par rayonnement électromagnétique.

Les coffrets des robots seront pourvus d'un dispositif de positionnement sur cette base d'émission -repère 10- figure 1- Ces dispositifs étant connus, ils ne seront pas décrits plus avant. Les différents robots s'affectent par ordre de priorité suivant un protocole résidant en mémoire - repère 2- figure 1 - Un objectif de clampage. Les robots communiquent entre eux via le système de télécommunication - repère 11 - figure 1 -par ondes électromagnétiques ou ultra sons.

Dès que le robot a atteint son objectif,il se clampe sur l'engin toujours en utilisant le système de positionnement. Une des variantes de clampage peut être réalisée par le dispositif de verrouillage pour changement d'outils représenté sur la figure 14.

D'autres variantes sont possibles par crochets ou par vérins. A partir du clampage,le robot met ses pattes auxiliaires en position haute, et teste le sol en mesurant, à l'aide des capteurs des variables articulaires et des capteurs d'efforts, la portance du sol. La communication s'établit avec les autres robots clampés par fibre optique- repère 62- figure 8. Les fibres sont doublées et solidaires de l'engin à soulever.

Il est à noter que le procédé décrit présentement s'applique sur des engins immergés. Puis,en fonction de la portance,un type de démarche est choisi. Il est rappelé que,pour un robot à n pattes, le nombre de démarches théoriques est (2n-1)! Mais, dans ces démarches,certaines utilisent le déplacement d'une patte à la fois,d'autres nécessitent la moitié des pattes. Il est important,par rapport à une portance de sol-par exemple 2 bars- de ne pas dépasser la pression au sol en allure de marche quand le poids de l'engin ne repose plus que sur 3 pattes au lieu de 6. Pour un camion enlisé de 15 tonnes,par exemple,prévu pour 8 clampages avec des platines de pattes de 350 mm x  350 mm,un sol de 2 bars,chaque patte peut soulever 2400 da N par sept pattes en allure lente = 16,8 tonnes,ce qui est tout juste suffisant compte-tenu du coefficient dynamique pour sortir le camion de sa situation. Mais, en sol plus ferme,une marche à portance alternée 4 pattes puis 4 pattes permettra une plus grande vitesse de progression.

La figure 6 représente 1/2 vue de dessus d'une habitation rendue mobile par des platines de clampage sur lesquelles sont installées des pattes. Ces nouvelles possibilités libèrent l'architecture traditionnelle du carcan des voiries et réseaux sans, pour autant, rentrer dans les catégories caravaning, puisque les bâtiments sont largement hors gabarit routier. De plus, ils peuvent se mouvoir à l'aide des pattes formant ainsi un grand robot sur des terrains impraticables aux engins traditionnels.

On retrouve alors les compositions architecturales des bâtiments modulaires avec des salles communes- repère 65 - et des petits volumes -repère 64 - pour cuisine, salle de bains, etc.....

Pour de telles architectures à pattes, il est recommandé de ne pas utiliser X pattes avec leur coffret de commande intégré et les pattes auxiliaires, mais des pattes qui se fisent sur des platines lors des transports, et qui sont alimentées en énergie et coordonnées par un dispositif installé, pour la circonstance, dans l'engin. Il est à noter que les pattes et le dispositif central peuvent être loués uniquement lors des déplacements.

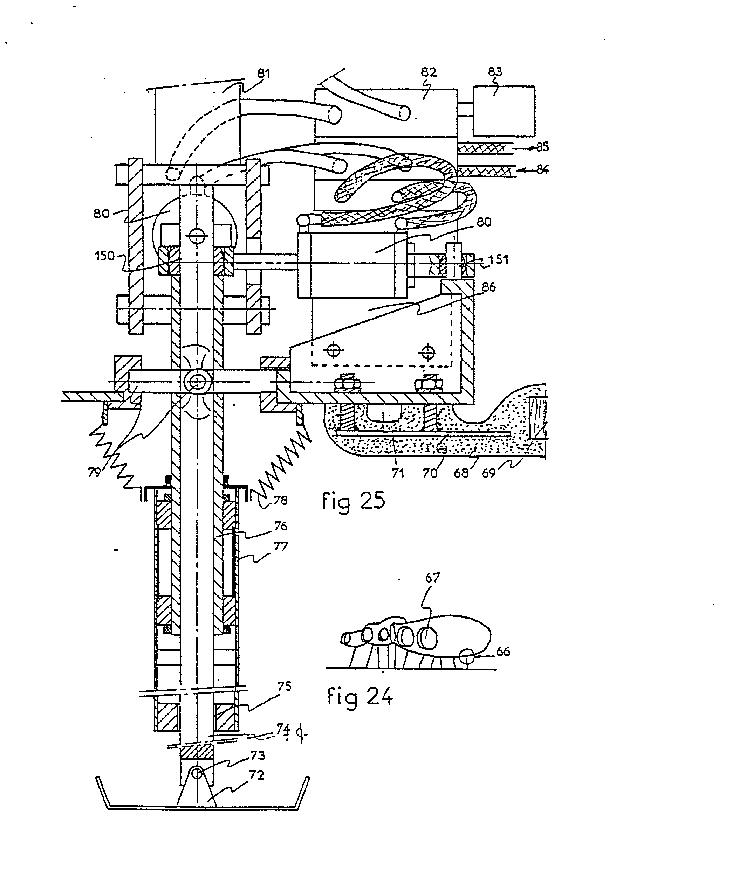

Une autre variante de la présente invention, toujours dans le cadre de l'architecture à pattes, est représentée figure 24. Une série d'engins avec des hublots - repère 67 - sont équipés avec des pattes -repère 66 - dont le détail est donné par la figure 25. La coque de l'engin - repère 68 - peut être un sandwich balza- repère 69 - et peaux intérieure et extérieure en polyester armé de fibre de verre.

Une platine - repère 70 - noyée dans le polyester assure la liaison entre la coque et le carter de la patte;un joint d'étanchéité sera prévu- repère 71. La patte est constituée :  d'une platine de sol - repère 72 -  articulée au point repère 73; le bas de la patte - repère 74-en métal coulisse au travers de bague - repère 75 - et du tube principal- repère 76. Le tube 77 n'est qu'un habillage sans autre fonction que d'empêcher la poussière de pénétrer dans les mécanismes. Un soufflet en plastique souple-repère 78-complète l'étanchéité. Un cardan- repère 79 - permet 2 degrés de liberté. Au-dessus, 2 vérins hydrauliques,disposés à 90° l'un par rap - port à l'autre - repère 80- permettent de composer des mouvements de la patte dans le plan;un troisième vérin -repère 81 - donne un troisième degré de liberté nécessaire pour obtenir l'appui réparti sur les pattes.

Un ensemble de distributeurs hydrauliques- repère 82 - et un accumulateur hydraulique- repère 83 - assurent la fonction d'alimentation des vérins à partir de l'arrivée - repère 84- et du retour repère 85.L'ensemble est monté sur une platine - repère 86 - qui se démonte en dehors des périodes d'utilisation . En variante,il est prévu d'inclure le vérin 81 dans le tube 77 mais, dans ce cas,il n'est plus démontable rapidement pour la location de la fonction marche robotique.

La figure 7 représente,vue de dessus une autre variante suivant la présente invention.Une structure tubulaire - repère 87 - sert de support à des sièges - repère 88 - pour le transport des personnes dans les parcs, expositions, etc.....

Des présentoirs ou panneaux - repère 89 - sont fixés sur la structure. Ils permettent de signaler les amnifestations,par exemple,dans l'exposition. Le mode énergétique est un ensemble de batteries logées dans la structure que l'on peut facilement extraire par le dessous du robot.

La cinématique du robot permet la dépose et l'échange des batteries par lui-même simplement en se baissant au ras du sol,avec un dispositif de verrouillage pour la prise des batteries. Les batteries alimentent une pompe hydraulique qui, ensuite,distribue la pression sur chaque patte. Dans le cas où l'on dispose de vérins électriques, le robot sera simplifié. Dans le cas où une recharge rapide est nécessaire,on utilisera des réservoirs d'air comprimé à haute pression qui alimenteront un échangeur air-huile.

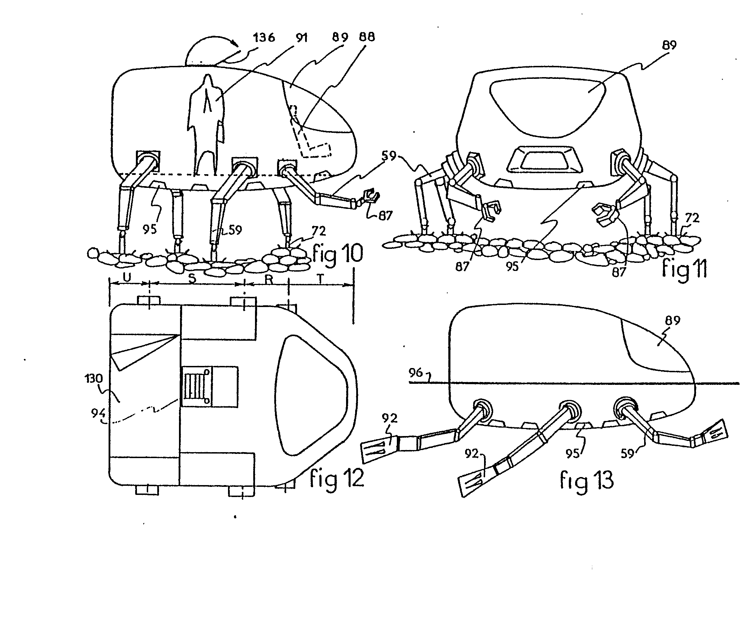

La figure 10 représente une autre variante suivant la présente invention:le robot de plaisance vu en élévation avec des pattes robotiques-repère 59. Sur les 4 pattes arrière sont montées les platines d'appui 72 qui permettent la progression sur le sol;sur les pattes avant sont montées les pinces pour le travail.

La figure 11 représente le même robot mais vu de face avec la verrière de la cabine de commande-repère 89.

La figure 12 représente,vue en plan,un des types d'aménagement du robot de plaisance avec une couchette-repère 130-,un escalier 94 d'accès au panneau de sortie et d'éclairement - repère 136. Sous l'escalier,on installe le groupe de puissance,de manière à obtenir un centrage correct du robot pendant la marche à 6 pattes,ou pendant les opérations de manipulation avec les pinces du robot.

0074286

Pour améliorer la stabilité du robot et sa capacité à manipuler de lourdes charges,on prendra soin de respecter 1, 1 R $<$ S $<$ 2R,R et S étant l'écartement entre les pattes centrales et respectivement les pattes avant et les pattes arrière,et on choisit les distances respectives T et S entre les extrémités avant et arrière et les pattes correspondantes pour que le centre de gravité avec les pattes en position neutre se situe au maximum au 1/3 de R ou S par rapport aux pattes centrales.

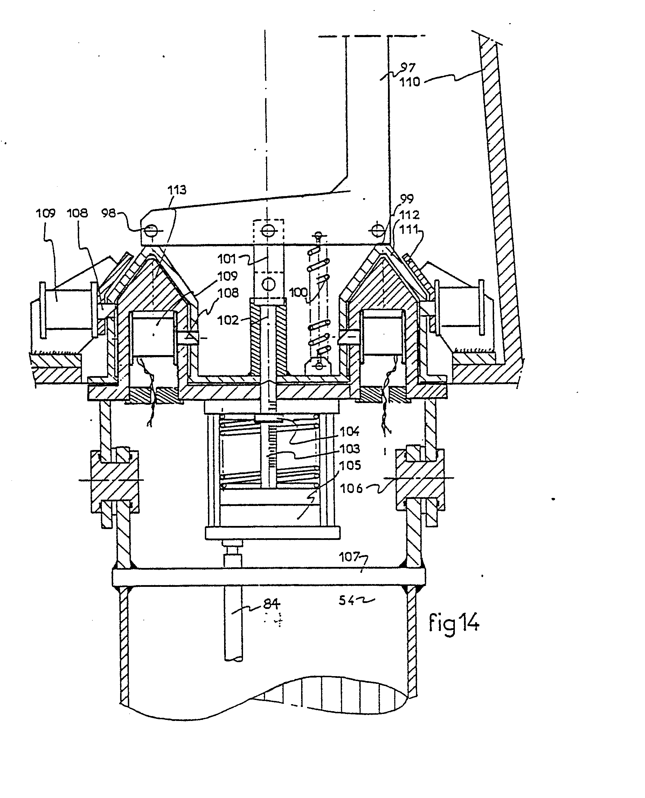

Pour équilibrer au mieux le robot,on utilise un ballast avant et un arrière qui améliorent le centrage lors du déplacement d'une personne à l'intérieur du robot - repère 91 - ou en manipulation de poids important par les pinces. On remarque figure 13 l'équipement des pattes - repère 59 - avec des palmes de natation et la ligne de flottaison dans l'eau - repère 96.

L'une des caractéristiques de la présente invention est le dispositif de changement d'outils par le robot lui-même. En effet,des réservations -repère 95 - sont ménagées dans la coque du robot. Elles contiennent différents outils que le robot peut saisir,verrouiller et utiliser pour mener à bien ses objectifs.

La figure 14 représente une variante de ces dispositifs, un outil pince a été représenté- repère 97 - il pivote sur l'axe 98 et le cône - repère 99-fait office de butée;un ressort de rappel 100 maintient la pince en position ouverte. Une biellette repère 101 - transmet l'effort du piston 102 en fermeture de pince. Ce piston repère 102 est en contact mécanique avec l'axe du vérin hydraulique - repère 103. Cet axe comporte un code Grey qui est lu par

la cellule optoélectronique-repère 104-de manière à fournir un signal de la position de l'axe 103. Un distributeur relié au système robotique alimente,par un flexible - repère 84 - la chambre du vérin.à simple effet - repère 105. La rotation sur l'axe 106,entre la pince et la patte du robot-repère 54 - est commandée par un vérin sur la patte 54.

En variante,pour augmenter le nombre de degrés de liberté du poignet du robot,on fixe au niveau de la platine - repère 107 - un dispositif de rotation suivant l'axe longitudinal de la patte et/ou un 2ème dispositif d'inclinaison -repère 106.

Pour le mouvement de poignet,un dispositif d'épaule,réduit à la dimension du poignet, permet d'obtenir 3 degrés de liberté.Les possibilités dynamiques sont améliorées si on reporte,dans l'épaule du robot,par l'intermédiaire de tringles à billes ou de câbles,les vérins de commande du mouvement de poignet.

Le dispositif figure 14 comprend deux fonctions de même nature,l'interchangeabilité des outils et le support d'outils qui sert de râtelier grâce à des réservations cloisonnées-repère 110- délimitant,d'une manière étanche,le porte outils et la coque. Dans chacune de ces fonctions,on retrouve: l'approche,le verrouillage,le contrôle et, en plus, pour le changement d'outils,la transmission de puissance. L'approche est assurée par des plans de forttement - repère 111 et 112 pour l'assemblage outil dans réservation. Pour l'approche poignet outil, ce sont les surfaces 113 et 112 qui assurent la fonction. Il serait,en effet,pénalisant pour le système robotique d'avoir une précision de positionnement de l'ordre du millimètre en bout de poignet. Il est plus judicieux d'opérer avec une précision

moindre de l'ordre du centimètre,par contre,de disposer de surfaces de frottement qui guident l'approche du poignet sur l'outil ou l'outil dans la réservation.

Le guidage est complété par un logiciel qui scrute les augmentations d'efforts résistants dans la phase d'approche et corrige par commande de l'actionneur opposé. Il s'agit, en fait, d'une boucle d'asservissement supplémentaire qui est activée seulement dans les phases d'approche.

Le verrouillage est assuré par un loquet, repère 108-actionné par un solénoïde - repère 109. Des bielles,crémaillères,excentriques peuvent remplacer ce dispositif simple de solenoïde pour des applications spéciales. Dans tous les cas,un contrôle de verrouillage sera réalisé par contact électrique entre les verrous,capteur optoélectronique ou capacitif. De tels dispositifs sont du domaine technique connu. La partie changement d'outils du système robotique de la présente invention est applicable notamment pour les éléments suivants:

-Palmes de natation en plastique renforcé avec platine de fixation en métal sur poignet,

-Outils tranchants composés d'une lame et d'une platine de fixation pour travaux agricoles,

-outils de travaux publics comme marteaux piqueurs, cisailles à câbles,pulvérisateurs;

-Pieds en acier plein en forme de crayon peu sensible aux mines;

-Propulseurs à hélices,plans porteurs hydrodynamiques avec angle d'incidence commandé par la position de la patte et/ou actionneur de poignet.

Un autre composant du présent système robotique est appelé : Collier ou Trompe. Il permet une liaison articulée entre le corps du robot et la tête.

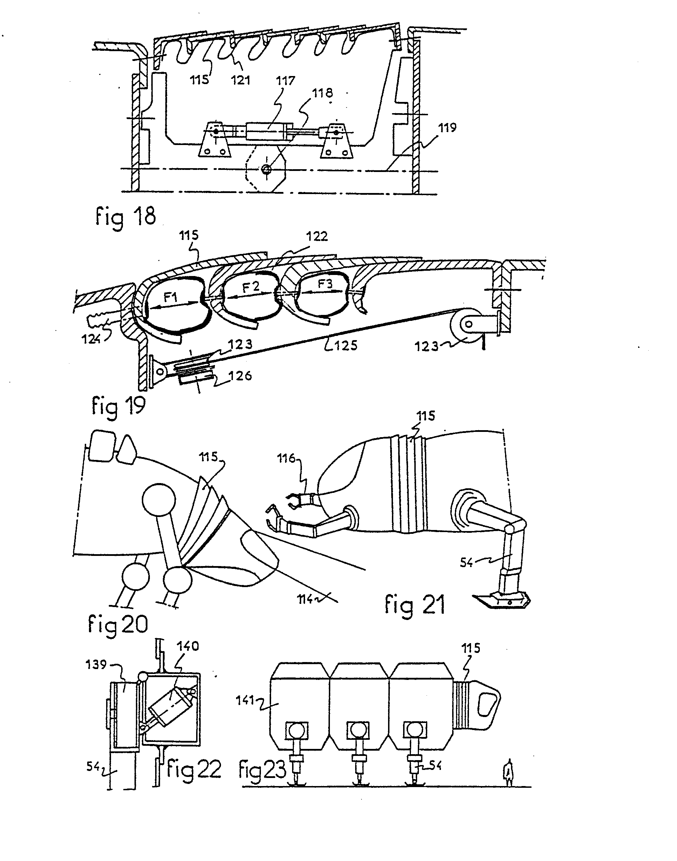

La figure 20 représente l'avant d'un robot dont la tête est inclinée pour la marche terrestre. Le champ de vision de la cabine de commande -repère 114- est nécessaire pour une progression aisée en manuel. En navigation maritime,il faut, au contraire,présenter un profil hydrodynamique à faible traînée,et la position haute est nécessaire.

La figure 21 représente l'avant d'un robot avec le collier- repère 115- en position horizontale avec des pattes mandibules solidaires de la tête-repère 116. Le collier apporte l'avantage d'une cinématique particulière des mandibules par rapport au corps du robot.

Une première variante de collier est représentée figure 18. Cette coupe horizontale indique le montage d'un vérin-repère 117-entre la tête et le corps par une articulation centrale-repère 118. Le montage est symétrique par rapport à l'axe longitudinal du robot-repère 119. Un capteur de déplacement incrémental,absolu ou analogique sera fixé entre la tête et le corps;les signaux seront dirigés vers un circuit d'interface relié au circuit 27. En mettant en série 2 mécanismes- 1 horizontal et 1 vertical - on obtient le mouvement bas, haut, droite, gauche de la tête.

Des écailles - repère 115-figure 18- forment la partie rigide du collier. Un joint étanche en néoprène-repère 121 - forme la partie souple.

Une deuxième variante de collier est représentée sur la figure 19. Les écailles - repère 115 - comportent des vessies - repère 122-pneumatiques ou hydrauliques. Les vessies sont reliées entre elles par des conduits de fixation et de communication pour assurer le transfert du fluide d'un ensemble de vessies. Sur l'un des conduits par côté à commander, soit 4 conduits si l'on commande droite, gauche, haut, bas, un embout de raccordement -repère 124- est fixé. Par cet embout se fait l'alimentation en fluide du collier. Dans l'exemple présentement décrit où l'on commande droite, gauche, haut, bas, on aura 4 vessies par écaille qui développent chacune une force F correspondante à la pression d'alimentation. Un système à câble-repère 125- avec poulies-repère 123- maintient la distance moyenne entre la tête et le corps du robot. Ce câble joint 4 poulies solidaires de la tête et 4 poulies solidaires du corps. De plus, 4 capteurs de rotation incrémentaux - repère 126- sont reliés par interface au circuit-repère 25 - figure 1 - ce qui permet de déterminer la position de la tête par rapport au corps du robot.

La vessie comporte une partie épaisse dans la partie non enveloppée par l'écaille. Cette surépaisseur rend la vessie non dilatable pour cette partie, ce qui évite les hernies. Les dispositifs de colliers peuvent être employés en réduisant les dimensions pour des trompes de robot.

La figure 15 représente la vue en plan intérieure d'un robot de plaisance avec la cabine de commande, le collier - repère 115 - le coin séjour avec des sièges - repère 127 - le sas de descente - repère 128 - le bloc technique - repère 129 - comprenant le moteur, le groupe fluides et services, les 2 cabines arrière - repère 130 - avec leur porte d'isolement - repère 131- le compartiment toilette - repère 132 - le coin cuisine - repère 133.En pointillé, sont figurés les ballasts - repère 134 - en néoprène qui assurent l'immersion du robot.

Lorsque les ballasts ne sont pas utilisés, ils sont repliés au fond des coffres qui les contiennent, ou, pour le ballast de collier, sanglés le long des parois verticales. Quand l'immersion est commandée, la pompe et les vannes ballasts sont activées par le circuit - repère 30 - figure 1. L'équilibre s'effectue par le circuit - repère 28.

Ce type de robot a une immersion limitée à quelques mètres.

Dans chaque ballast - (sauf les ballasts de colliers) - est soudée une séparation intérieure qui délimite des ballasts d'équilibrage du robot. En effet, lors d'une démarche lente, la position du centre de gravité d'un robot quadrupède est proche du triangle de sustentation lorsqu'une patte est levée.

L'ensemble des occupants d'un robot de plaisance circule à l'intérieur sans se préoccuper du centrage du robot. Une circulation d'eau entre les différents ballasts assure l'équilibrage. Les actionneurs sont la pompe à ballasts et les vannes. Le dispositif de commande est le circuit -repère 30 - du système robotique asservi par les capteurs de force des vérins.

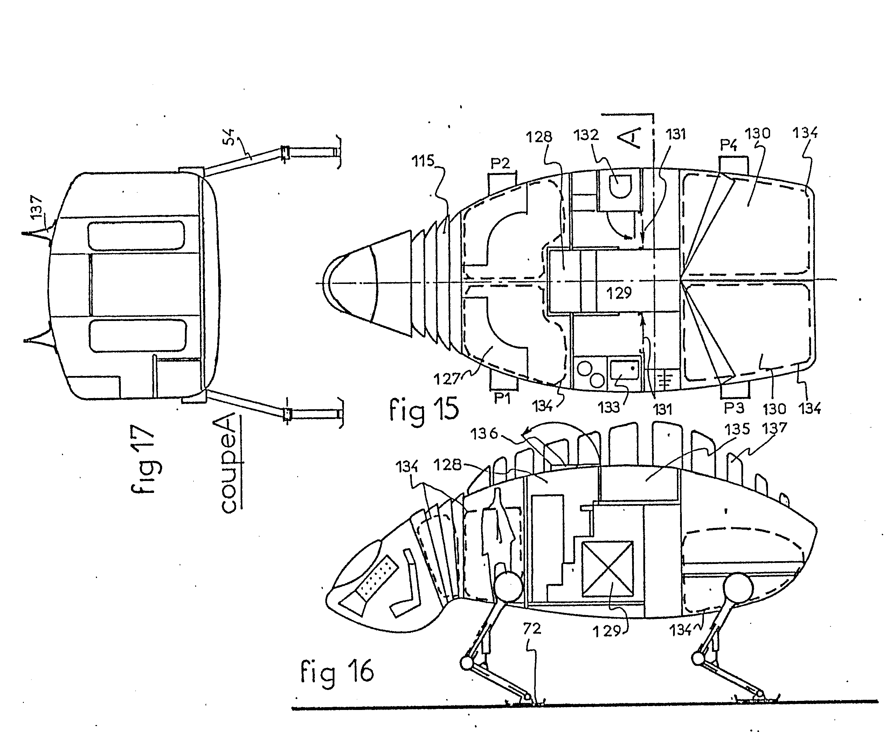

La figure 16 montre en élévation les ballasts. On remarque dans ces dispositions constructives la position du panneau de descente - repère 136 - et du cockpit central 135. Les écailles dorsales - repère 137 - servent d'adossoir ou de garde-corps pour les bains de soleil sur le dos du robot. Elles sont constituées par des moulages en plastique fixés à la coque par des vis ou boulons vissés dans des inserts.

On remarque les pattes - repère 54 sur la figure 7 - qui sont une variante du dispositif de la figure 2. Cette variante a été tracée en trait pointillé - repère 138 - pour la sortie d'épaule sur laquelle est fixée une patte - repère 54. On note que, sur ce type de patte, le couple de rotation est très important, notamment lors des efforts alternés en décélération. Il est recommandé de doubler les vérins - repères 44 et 45 - par leurs opposés sur la figure 2.

On remarque dans le cas de pattes suivant la figure 16 que le mouvement de l'épaule est d'environ 90°, alors que le mouvement de déplacement avant arrière ou haut bas est faible. Dans ce cas, on aura intérêt à garder la cote R et à augmenter la cote S pour accroître le couple utile de la patte.

Pour obtenir des rotations sur l'axe d'épaule supérieure à 90°, il sera nécessaire de passer la platine levier 49 de l'autre côté de l'axe joignant les rotules - repères 150 et 151- du vérin - repère 44 - figure 2. Dans ce cas, la rotation n'est plus entravée par la présence de l'axe d'épaule - repère 54.

Parmi le grand nombre de démarches théoriques possibles pour un robot quadrupède, quelques unes seulement sont utilisables en robotique en raison de la puissance de calcul que demande, en temps réel, une commande dynamique.

Le système de la présente invention permet de passer d'une démarche lente, sans commande en dynamique, à une démarche plus rapide. En effet, les microprocesseurs des circuits 1 et 32- figure 1- peuvent être remplacés par des paires de microprocesseurs genre APX432 et, au fur et à mesure de l'apprentissage du robot, augmenter sa capacité de calcul en cascadant une série de microprocesseurs par circuit.

La démarche la plus simple pour un robot quadrupède est celle où, au plus, une patte est en l'air à chaque instant. Par exemple, sur la figure 15, les pattes sont repérées de 1 à 4. Premier mouvement, les pattes sont toutes posées au sol, les pattes 1 et 3 en avant par rapport aux pattes 2 et 4. Deuxième mouvement, la patte 4 en l'air se dirige vers 2. Troisième mouvement, la patte 4 posée derrière la patte 2, toutes les pattes sont au sol. Quatrième mouvement, la patte 2 en l'air avance. Cinquième mouvement, la patte 2 est arrivée au sol, toutes les pattes sont posées, elles forment un parallélogramme inverse de celui du premier mouvement et ainsi de suite.

On trouvera dans la bibliographie des descriptions de démarche pour application au présent système.

La figure 22 représente une variante d'épaule pour patte auxiliaire avec un moteur hydraulique à pistons radiaux- repère 139 - et un vérin d'écartement - repère 140.

La figure 23 représente un assemblage de modules robitiques - repère 141-avec un collier - repère115 - une cabine avant. Sur un assemblage de ce type, on peut augmenter le nombre de modules entre 6 et 12 environ, c'est une autre variante de robot modulaire à pattes.

La présente invention ouvre une nouvelle voie dans la robotique de plaisance, les robots quadrupèdes ou hexapodes de survie, l'architecture à pattes pour motels, centre de vacances, grands chantiers itinérants, engins agricoles,engins de travaux publics,engins de neige.

Un avantage de l'invention résulte du fait que la jambe ou le bras pivote sur trois axes autour d'un point fixe,l'articulation pouvant être matérialisée comme indiqué à la figure 2,par un cardan 48 porté par un roulement 47,c'est-à-dire en définitive par trois roulements ou pivots dont les axes perpendiculaires entre eux,passent par le même point.

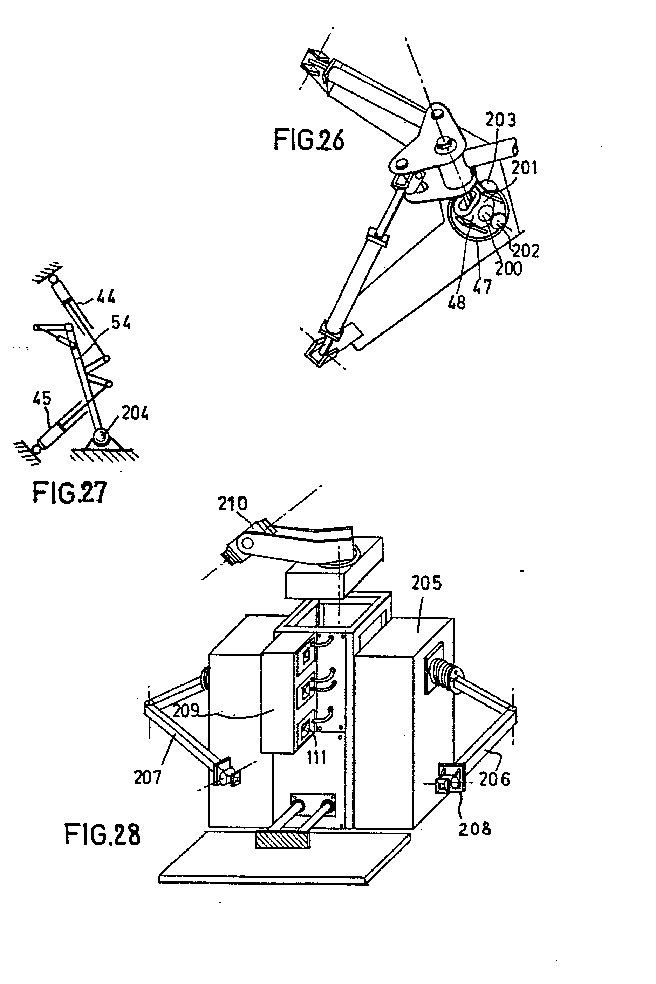

Suivant une modalité importante de l'invention, illustrée par la figure 26 au moins un de ces roulements ou pivots 47, 200,201 et de préférence les trois, est équipé d'un capteur de rotation 202,203, le capteur de rotation relatif au roulement 47 n'est pas visible sur cette figure. On obtient ainsi une structure extrêmement compacte pour détecter la position et l'orientation de la jambe ou bras.

La figure 27montre une disposition d'épaule différente de celle de la figure 2,et dans laquelle le point fixe, symbolisé ici par une rotule 204 est situé à l'extrémité de la jambe 54 alors que les vérins 44,45 sont dans une position intermédiaire sur la jambe. Une telle disposition est avantageuse pour un robot à l'intérieur duquel la place est limitée car les vérins peuvent être placés à l'extérieur.

La figure 28 est relative à une application de l'invention à un robot à bras destiné,par exemple à alimenter une machine outil. Le robot comporte un châssis 205 qui porte deux bras 206,207 articulés par une épaule telle que décrite plus haut. Ces bras se terminent par un poignet 208 qui est conçu de la manière décrite en liaison avec la figure 14,et ils sont capables de prendre des outils dans un magasin 209 (on n'a pas représenté le magasin relatif au bras 207) Les entrées de ce magasin sont pourvues

de su rfaces de frottement 111 pour le guidage du poignet en direction de l'outil. Il va de soi que le nombre d'entrée du magasin peut être bien supérieur aux trois qui sont indiqués sur la figure. Ce magasin, avantageusement peut aussi être placé autour de l'épaule.

Les bras 206,207 sont conçus pour coopérer entre eux, c'est-à-dire d'exécuter divers mouvements d'une pièce à usiner par action coordonnée de leurs vérins. On a représenté en 210 une caméra de guidage reliée à des circuits de reconnaissance de formes comme indiqué plus haut.

REVENDICATIONS

1.Système de robots à pattes ou à bras comportant des dispositifs mécaniques de locomotion ou de manutention actionnés par vérins commandés par microprocesseurs,caractérisé en ce qu'au moins une patte ou un bras est pourvu d'une articulation permettant sa rotation autour d'un premier axe dit longitudinal et autour de deux autres axes distincts,ces trois axes concourant en un premier point fixe, et des moyens d'actionnement constitués essentiellement par deux vérins qui s'articulent par des rotules d'une part sur la patte ou le bras en deux points distincts et non alignés avec le premier point fixe et d'autre part en un second et troisième point fixes distincts et non alignés avec le premier point fixe.

2. Système de robots à pattes ou à bras selon la revendication 1,caractérisé en ce que la patte ou le bras porte une platine perpendiculaire à l'axe longitudinal et sur laquelle les deux vérins sont articulés par des rotules situées dans deux plans perpendiculaires et passant par l'axe longitudinal.

3.Système de robots à pattes ou à bras suivant la revendication 1,caractérisé par l'architecture informatique hiérarchisée qui comprend un microprocesseur maître (1) connecté à une commande manuelle (20) qui active ou remplace le microprocesseur maître (1) par un microprocesseur couplé avec un clavier (12)pour commandes manuelles.

4.Système de robots à pattes suivant la revendication 1,caractérisé par un module autonome constitué d'un coffret de puissance (60) sur lequel sont fixées 2 pattes auxiliaires (61) et/ou une patte de force, un dispositif de clampage (58),une liaison par ondes électromagnétiques (62)ou ultrasons qui passent par le circuit (11).

5.Système de robots à pattes suivant la revendication 1,caractérisé par un corps de robot tubulaire (87)sur lequel est fixée une série de sièges et/ou des présentoirs et panneaux d'indications.

6.Système de robots à pattes suivant la revendication 1,caractérisé par des modules habitables possédant des platines latérales et frontales pour fixation des pattes lors des déplacements.

7. Système de robots à pattes suivant la revendication 1 ,caractérisé par un collier constitué d'écailles rigides (115),d'un joint d'étanchéité (121),d'un actionneur qui est un vérin (117) ou une série de vessies (122)alimentées par un fluide et maintenues à une distance moyenne fixe soit par câble (125) ,soit par vérins.

8. Système de robots à pattes suivant la revendication 7,caractérisé par des pattes mandibules situées sur une partie du corps reliée au reste du corps par le collier.

9. Système de robots à pattes suivant la revendication 1  caractérisé par l'implantation d'écailles dorsales (137)formant adossoir et garde-corps.

10.Système de robots à pattes suivant la revendication 1,caractérisé par un cockpit central (135)sur robot de plaisance avec 1 ou 2 cabines derrière le cockpit et groupe de puissance (129)sous le cockpit.

11.Système de robots à pattes selon la revendication 1,caractérisé par un ensemble de ballasts (134)pour immersion et/ou centrage du robot.

12.Système de robots à pattes ou à bras selon la revendication 1,caractérisé par des réservations porte-outils (95)dans la coque accessible pour

le chargement d'outils par le poignet du robot muni d'un changeur d'outils par surfaces de frottement (111, 112, 113) commandé par la deuxième boucle d'asservissement.

13. Système de robots à pattes ou à bras selon la revendication 1,caractérisé en ce que l'articulation d'un bras comporte un palier ou roulement à l'intérieur duquel est monté un cardan pourvu de paliers ou roulements,et en ce que au moins un desdits paliers ou roulements sont équipés de capteur de rotation.

14. Système de robot à patte ou à bras selon la revendication 1,caractérisé en ce que le point fixe de l'épaule est placé contre les moyens d'actionnement et l'extrémité libre de la tête ou du bras.

15.Système de robot à patte ou à bras selon la revendication 1,caractérisé en ce que le point fixe de l'épaule est placé au-delà des moyens d'actionnement par rapport à l'extrémité libre de la patte ou du bras.

16.Système de robot à bras selon la revendication 1 caractérisé en ce qu'il comprend deux bras capables de coopérer ensemble pour manipuler des objets, et un magasin pour les outils interchangeables équipant lesdits bras.

fig:1

fig2

fig3

fig 4

fig 5

fig 6

fig 7

fig 9

fig 8

fig 11

fig 13

fig 10

fig 12

fig 14

fig 17

coupeA

54

137

fig 16

fig 15

72

134 128

136

129

134

127

115

P1

134

133

131

P2

128

132

129

131

A

131

P3 130 134

135 137

P4 130

134

fig 18

fig 19

fig 20

fig 21

fig 22    fig 23

fig 25

fig 24

FIG.26

203
201
202
200
47
48

FIG.27

44
54
45
204

FIG.28

210
205
209
207
111
206
208